(19) Europäisches Patentamt
European Patent Office
Office européen des brevets

(11) **EP 1 657 470 B1**

(12) **EUROPÄISCHE PATENTSCHRIFT**

(45) Veröffentlichungstag und Bekanntmachung des Hinweises auf die Patenterteilung:
**28.04.2010 Patentblatt 2010/17**

(51) Int Cl.:
*F16F 9/52* *(2006.01)*

(21) Anmeldenummer: **05022741.2**

(22) Anmeldetag: **19.10.2005**

(54) **Hydropneumatisches Federelement für Kraftfahrzeuge, insbesondere Kettenfahrzeuge**

Hydropneumatic spring for vehicle, especially tracked vehicle

Elément ressort hydropneumatique pour véhicule automobile, particulièrement pour véhicule à chenilles

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **11.11.2004 DE 102004054456**

(43) Veröffentlichungstag der Anmeldung:
**17.05.2006 Patentblatt 2006/20**

(73) Patentinhaber: **Krauss-Maffei Wegmann GmbH & Co. KG**
**80997 München (DE)**

(72) Erfinder:
• **Schlegl, Eugen**
**82194 Gröbenzell (DE)**
• **Bachmann, Harald**
**80636 München (DE)**
• **Wittmann, Christoph**
**85221 Dachau (DE)**

(74) Vertreter: **Feder Walter Ebert**
**Patentanwälte**
**Goethestraße 38 A**
**40237 Düsseldorf (DE)**

(56) Entgegenhaltungen:
**EP-A- 1 559 596   DE-A1- 2 511 289**
**DE-A1- 3 141 295   DE-A1- 10 328 541**
**ES-A- 2 221 514**

**Beschreibung**

Die Erfindung betrifft ein hydropneumatisches Federelement für Fahrzeuge mit den Merkmalen aus dem jeweiligen Oberbegriff der unabhängigen Patentansprüche 1, 2 und 6. Derartige Federelemente sind an sich bekannt.

In ES 2221514 ist ein ölpneumatischer Aufhängezylinder beschrieben, der es erlaubt, die Höhe eines Fahrzeugs in Bezug auf den Boden praktisch konstant zu halten, unabhängig davon, ob das Fahrzeug leer fährt oder eine beträchtliche Belastung aufweist.
Dieser bekannte ölpneumatische Aufhängezylinder umfasst einen aus einem äußeren Mantel und zwei oder mehr konzentrischen Teleskopkolben gebildeten Hydraulikzylinder. Der Hydraulikzylinder ist über eine Leitung mit einem Akkumulator verbunden, der eine Speicherkammer für das vom Hydraulikzylinder verdrängte Öl und eine Druckgaskammer aufweist, wobei die beiden Kammern durch eine elastische Membran voneinander getrennt sind. Der äußere Kolben der beiden Teleskopkolben besitzt eine Anschlagscheibe, die sich nach einem vorgegebenen Bewegungsweg des äußeren Kolbens auf den inneren Kolben auflegt und damit den Bewegungsweg des äußeren Kolbens begrenzt. Die wirksamen Kolbenflächen des äußeren und inneren Kolbens sind der Hydraulikflüssigkeit zugewandt. Bei steigender Belastung wird zunächst der äußere Kolben bewegt bis zu seiner Ausschaltung durch die Anschlagscheibe, über welche dann die Beanspruchung auf den inneren Kolben übertragen wird.

Bei einer Erwärmung steigt der Druck innerhalb eines derartigen hydropneumatischen Federelements an und das Fahrzeug hat die Tendenz weiter auszufedem.
Bei Kettenfahrzeugen wird das Ausfedern durch die Kette verhindert. Dies hat zur Folge, dass die Kettenspannung auf unzulässige Werte ansteigen kann. Aus diesem Grunde mussten bisher bei Kettenfahrzeugen Maßnahmen vorgesehen werden, um eine unzulässig hohe Kettenspannung zu verhindern. Dies kann durch Kettenspanner geschehen, die immer wieder von der Besatzung neu eingestellt werden müssen, oder es müssen Einrichtungen vorgesehen werden, durch die der Druck im Federelement während der Fahrt nachgeregelt wird. Der Erfindung liegt die Aufgabe zugrunde, ein hydropneumatisches Federelement mit den im Oberbegriff der Patentansprüche 1, 2 und 6 angegebenen Merkmalen so auszugestalten, dass es sich ohne zusätzliche Mess- und Regeleinrichtungen, unabhängig von der Temperatur, in seiner statischen Lage einstellt, so dass ein Nachstellen der Kettenspannung bei Erwärmung nicht notwendig ist.

Die Lösung dieser Aufgabe erfolgt prinzipiell mit den Merkmalen aus dem kennzeichnenden Teil der unabhängigen Patentansprüche 1, 2 und 6. Vorteilhafte Weiterbildungen der Erfindung sind in den abhängigen Ansprüchen beschrieben.

Ein Grundgedanke der Erfindung besteht darin, das Federelement so auszubilden, dass bei der Ausfederbewegung bei einem vorgegebenen Federweg ein Sprung in der Federkraft-Federweg-Kennlinie des Federelements erzeugt wird, durch den die Federkraft um einen vorgegebenen Betrag verkleinert wird. Hierdurch wird erreicht, dass auch im warmen Zustand die verfügbare Kraft nicht ausreicht, um unzulässig große Ausfederwege bzw. unzulässig hohe Kettenspannungen zu erzeugen.

Das erfindungsgemäße Lösungsprinzip geht von der Erkenntnis aus, dass ein Aufbau des hydropneumatischen Federelements mit zwei in Reihe oder parallel zueinander angeordneten Gasfedern die Möglichkeit schafft, die Kennlinie des gesamten Federelements so zu beeinflussen, dass im statischen Zustand ein Kennliniensprung auftritt, welcher bewirkt, dass, wenn das Fahrzeug im Ruhezustand, also unter statischer Last ist, das Federelement bzw. die Federelemente bei jeder Betriebstemperatur in einen vorgegebenen statischen Zustand gehen.

Das o.g. Lösungsprinzip kann, wie in den Unteransprüchen beschrieben und anhand weiter unten aufgeführter Ausführungsbeispiele erläutert, in unterschiedlicher Weise realisiert werden. Bei besonders einfachen und praktischen Ausführungsformen wird bei einer bestimmten Position während des Ausfederns ein Teil der wirksamen Kolbenflächen intern blockiert, wobei die Kolbenflächen so abgestimmt sind, dass die verbleibende wirksame Kraft auch im warmen Zustand des Federelements nicht ausreicht, um das Fahrzeug über die gewünschte Position hinaus anzuheben bzw. die Kettenspannung unzulässig zu erhöhen.

Im folgenden werden Ausführungsbeispiele des erfindungsgemäßen hydropneumatischen Federelements anhand der beigefügten Zeichnungen näher erläutert.

In den Zeichnungen zeigen:

Fig. 1A   in Schnittdarstellung eine erste Ausführungsform eines Federelements im ausgefederten Zustand;

Fig. 1B   eine Darstellung analog Fig. 1A das Federelement im statischen Zustand;

Fig. 1C   in einer Darstellung analog Fig. 1A das Federelement im eingefederten Zustand;

Fig. 2A   in einer Darstellung analog Fig. 1A eine weitere Ausführungsform eines hydropneumatischen Federelements im ausgefederten Zustand;

Fig. 2B   in einer Darstellung analog Fig. 2A das Federelement im statischen Zustand;

Fig. 2C     in einer Darstellung analog Fig. 2A das Federelement im eingefederten Zustand;

Fig. 3A     in einer Darstellung analog Fig. 1A eine dritte Ausführungsform eines hydropneumatischen Federelements im ausgefederten Zustand;

Fig. 3B     in einer Darstellung analog Fig. 3A das Federelement im statischen Zustand;

Fig. 3C     in einer Darstellung analog Fig. 3A das Federelement im eingefederten Zustand;

Fig. 4     die Kennlinie eines Federelements nach einem der Ausführungsbeispiele der Fig. 1A bis 3C.

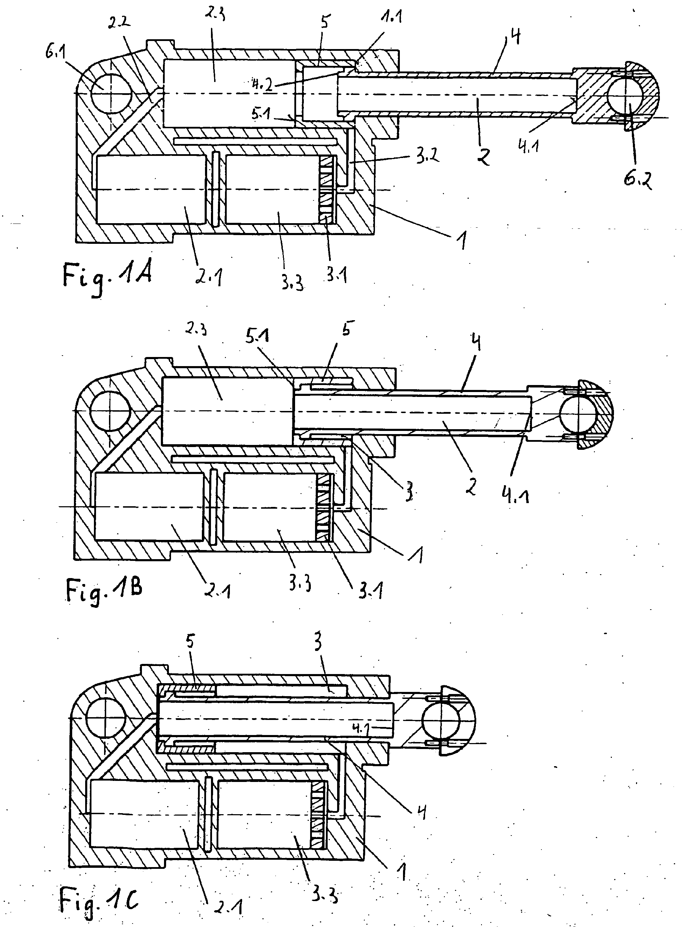

Das in den Fig. 1A bis 1C dargestellte, hydropneumatische Federelement besitzt ein Gehäuse 1, in dem eine Gaskammer angeordnet ist, die aus mehreren Abschnitten aufgebaut ist. Der erste Abschnitt 2.3 der Gaskammer ist als zylindrischer Innenraum des Gehäuses 1 ausgebildet, in dem das Außenrohr 5 von zwei teleskopisch geführten Rohrstücken 4 und 5 verschiebbar geführt ist. Das dem ersten Abschnitt 2.3 der Gaskammer zugewandte Ende des Außenrohres 5 bildet die wirksame Kolbenfläche 5.1 eines Ringkolbens, der als offener Kolben ausgebildet ist. Dies bedeutet, dass der erste Abschnitt 2.3 der Gaskammer über die Öffnung in der Kolbenfläche 5.1 mit dem Innenraum 2 des Rohrstücks 4 verbunden ist. Die dem ersten Abschnitt 2.3 der Gaskammer zugewandten Kolbenflächen sind auf zwei Anteile aufgeteilt, wobei sich ein erster Anteil vorgegebener Fläche an der Stirnwand des Außenrohres 5 befindet, während ein vorgegebener zweiter Anteil 4.1 und 4.2 am Innenrohr 4 angeordnet ist. Wenn das Innenrohr 4 vollständig in das Außenrohr 5 eingefahren ist (Fig. 1B und 1C), stützt es sich an einem Innenanschlag des Außenrohres 5 ab. Wie den Zeichnungen zu entnehmen, ist der erste Abschnitt 2.3 der Gaskammer über einen Verbindungskanal 2.2 mit einem zweiten Abschnitt 2.1 der Gaskammer verbunden, dessen Achse in einem vorgegebenen Abstand parallel zur Achse des ersten Abschnitts 2.3 innerhalb des Gehäuses 1 verläuft. Weiterhin ist im Gehäuse 1 eine erste Flüssigkeitskammer 3 ausgebildet, die als Ringraum zwischen dem Innenrohr 4 und der Innenwand des Gehäuses 1 bzw. der Innenwand des Außenrohres 5 ausgebildet ist. Diese erste Flüssigkeitskammer 3 ist über einen Verbindungskanal 3.2 und ein hydraulisches Dämpfungsglied 3.1 mit einer zweiten Flüssigkeitskammer 3.3 verbunden, die ebenfalls innerhalb des Gehäuses 1 angeordnet ist und deren Achse parallel zur Achse des ersten Abschnitts 2.3 der Gaskammer verläuft. Im dargestellten Ausführungsbeispiel liegt die zweite Flüssigkeitskammer 3.3 koaxial zum zweiten Abschnitt 2.1 der Gaskammer.

Am Gehäuse 1 sowie am nach außen geführten Innenrohr 4 sind Befestigungseinrichtungen 6.1 bzw. 6.2 zur Befestigung des Federelements zwischen der Schwinge und dem Gehäuse des nicht dargestellten Kettenfahrzeugs. Die Funktionsweise des Federelements nach Fig. 1A bis 1C ist folgende. Im voll eingefederten Zustand gem. Fig. 1C liegen sowohl das Außenrohr 5 als auch das Innenrohr 4 der teleskopartig ineinander verschiebbaren, ein Federbein bildenden Rohrstücke am in Fig. 1C linken Ende des den ersten Abschnitt 2.3 der Gaskammer bildenden zylindrischen Innenraums an. Bei der Ausfederbewegung bewegen sich das Außenrohr 5 mit der Kolbenfläche 5.1 und das Innenrohr 4 mit den Kolbenflächen 4.1 und 4.2 zunächst gleichzeitig nach rechts bis in den in Fig. 1B dargestellten statischen Zustand. Das bei dieser Bewegung aus dem Ringraum der ersten Flüssigkeitskammer 3 abströmende Öl gelangt in die zweite Flüssigkeitskammer 3.3. In dem in Fig. 1B dargestellten statischen Zustand trifft das Außenrohr 5 an der rechten Seite auf einen Anschlag 1.1 im zylindrischen Innenraum des Gehäuses 1, und somit wird die Kolbenfläche 5.1 in ihrer Weiterbewegung blockiert und ist nicht mehr wirksam. Beim weiteren Ausfedern in die Position gem. Fig. 1A bewegt sich nur noch das Innenrohr 4 im Außenrohr 5, so dass nur noch die am Innenrohr 4 angeordneten Kolbenflächen 4.1 und 4.2, wirksam sind und damit die gesamte wirksame Kolbenfläche verkleinert ist. Somit werden die bei der weiteren Ausfederung wirkenden Kräfte geringer. Die Verteilung der wirksamen Kolbenflächen wird so getroffen, dass bei einer Erwärmung des Federelements und entsprechend ansteigendem Gasdruck in den beiden Abschnitten 2.3 und 2.1 der Gaskammer die entstehenden Kräfte nicht mehr ausreichen, um das Fahrzeug über die gewünschte Position hinaus anzuheben.

Die in den Fig. 1A bis 1C dargestellte Konstruktion eines hydropneumatischen Federelements kann gemäß dem eingangs erwähnten Lösungsprinzip als Parallel-Anordnung von zwei Gasfedern beschrieben werden, wobei die erste Feder durch die Ringfläche 5.1 am Außenrohr 5 der teleskopartigen Rohrstücke und die zweite Feder durch die Kolbenflächen 4.1 und 4.2 am Innenrohr 4 der Rohrstücke realisiert sind.

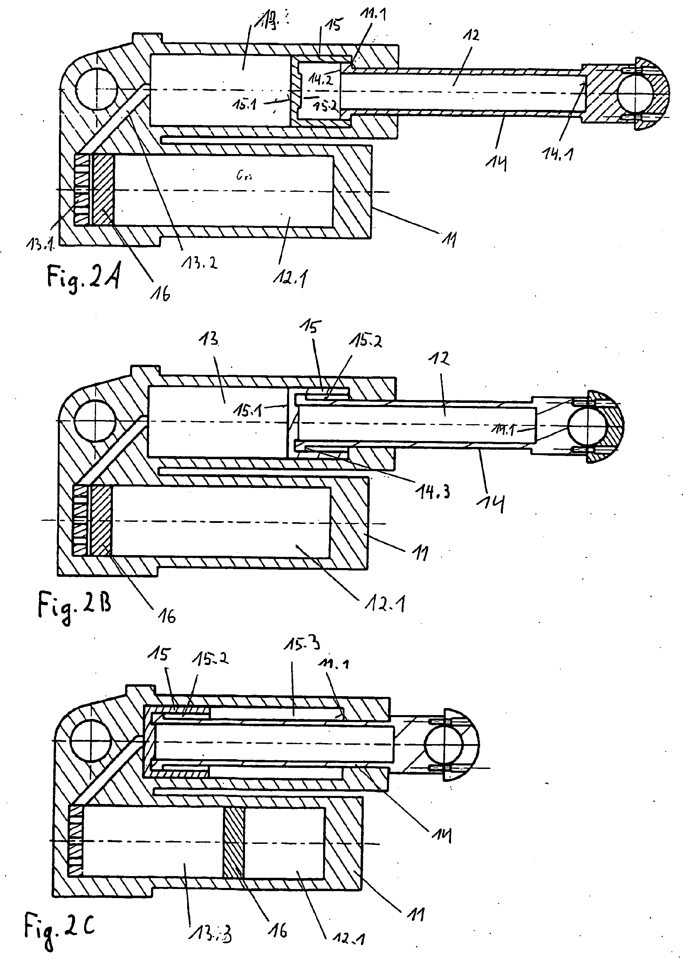

Die in den Fig. 2A bis 2C dargestellte Ausführungsform eines hydropneumatischen Federelements unterscheidet sich von der oben beschriebenen Ausführungsform schon dadurch, dass sie innerhalb eines Gehäuses 11 zwei voneinander getrennte Gaskammern 12 und 12.1 aufweist. Die erste Gaskammer 12 wird durch den Innenraum der teleskopartig geführten Rohrstücke 14 und 15 gebildet, wobei das Außenrohr 15 ein geschlossener Kolben ist und im zylindrisch ausgebildeten Innenraum des Gehäuses 11 angeordnet ist, der eine erste Flüssigkeitskammer 13 darstellt. Die der ersten Flüssigkeitskammer 13 zugewandte Stirnfläche 15.1 des Kolbens ist größer als die innerhalb der ersten Gaskammer 12 liegenden Stirnflächen 14.1 und 14.2 am Innenrohr 14. Die zweite Gaskammer 12.1 des Federelements ist innerhalb des Gehäuses 11 derart angeordnet, dass ihre Achse parallel zur Achse der ersten Gaskammer 12 verläuft. Koaxial zur zweiten Gaskammer 12.1 ist eine zweite Flüssigkeitskammer 13.3 angeordnet, die über ein hydraulisches Dämpfungsglied 13.1 und einen Verbindungskanal 13.2 mit der ersten Flüssigkeitskammer 13 verbunden ist. Die zweite Flüssigkeitskammer 13.3 ist von der zweiten Gaskammer 12.1 durch einen beweglichen Trennkolben 16 getrennt.

Die Funktionsweise der Ausführungsform nach den Fig. 2A bis 2C ist folgende.

In der in Fig. 2C dargestellten, eingefederten Position ist das Innenrohr 14 der beiden Rohrstücke voll in das Außenrohr 15 eingefahren und stützt sich an der Rückseite der Stirnfläche 15.1 ab. Die zwischen dem Innenrohr 14 und der Innenwand des Gehäuses 11 bzw. der Innenwand des Außenrohres 15 entstehenden Ringräume 15.2 und 15.3 haben bei dieser Ausführungsform Atmosphärendruck.

Die in den Fig. 2A bis 2C dargestellte Konstruktion eines hydropneumatischen Federelements kann als Anordnung in Reihe von zwei Gasfedern beschrieben werden, wobei die erste Feder durch die geschlossene Kolbenfläche 15.1 am Außenrohr 5 der teleskopartig geführten Rohrstücke und die zweite Feder durch die Kolbenflächen 14.1 und 14.2 am Innenrohr 14 der Rohrstücke realisiert ist.

Bei der Ausfederbewegung gerät in dem in Fig. 2B dargestellten statischen Zustand das Außenrohr 15 an den Innenanschlag 11.1 des Zylinderraums innerhalb des Gehäuses 11, und somit wird die Weiterbewegung des Außenrohres 15 und damit der Stirnfläche 15.1 blokkiert. Dies hat zur Folge, dass die erste Feder nicht mehr wirksam werden kann. Das weitere Ausfedern aus dem statischen Zustand gem. Fig. 2B in die ausgefederte Position gem. Fig. 2A geschieht nunmehr nur noch unter der Einwirkung der zweiten Feder. Da hier ein niedrigerer Druck eingestellt ist, kann diese Feder bei Erwärmung nicht über die statische Position hinaus ausfedern. Bei einer Erwärmung der Gasfedern im statischen Zustand gem. Fig. 2B hat die Druckerhöhung in der zweiten Gaskammer 12.1 keinerlei Wirkung auf die Ausfederung. Die wirksamen Kolbenflächen können so eingestellt sein, dass auch bei Temperaturerhöhung keine Anhebung des Fahrzeugs auftritt. Durch einen Anschlag 14.3 am Innenrohr 14 wird der maximale Ausfederungsweg begrenzt.

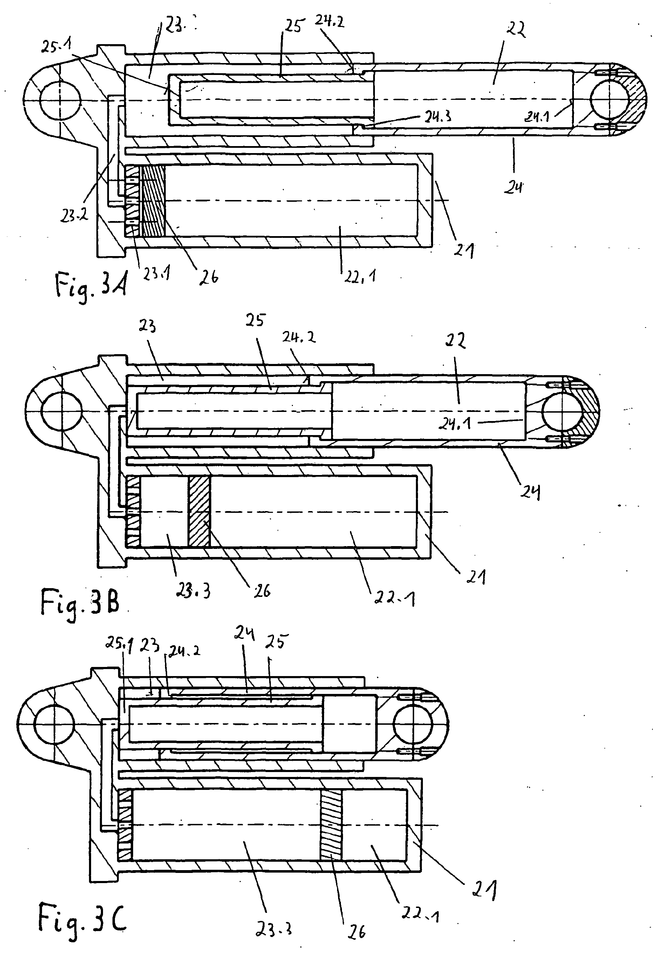

Bei der Ausführungsform des Federelements nach den Fig. 3A bis 3C sind ebenfalls innerhalb eines Gehäuses 21 zwei voneinander getrennte Gaskammern angeordnet, wobei wiederum die erste Gaskammer 22 durch den Innenraum der teleskopartig ineinander geführten Rohrstücke 24 und 25 gebildet wird. Bei diesem Ausführungsbeispiel ist das in das Gehäuse hineingeführte Rohrstück als Innenrohr 25 und das aus dem Gehäuse herausgeführte Rohrstück als Außenrohr 24 ausgebildet. Das geschlossene Ende des Innenrohres 25 zu einer ersten Flüssigkeitskammer 23 hin bildet die wirksame Kolbenfläche 25.1. Das Innenrohr 25 besitzt einen kleineren Durchmesser als die erste Flüssigkeitskammer 23 und ist lediglich im Außenrohr 24 geführt. Das Außenrohr 24 ist in der ersten Flüssigkeitskammer 23 geführt. Die wirksame Kolbenfläche des Außenrohres 24 zur Flüssigkeitskammer 23 hin ist als Ringfläche 24.2 zwischen dem Gehäuse 21 und dem Innenrohr 25 ausgebildet.

Die maximale Ausfahrbewegung der beiden teleskopartig geführten Rohrstücke 24 und 25 ist durch Anschläge 24.3 begrenzt. Die der ersten Gaskammer 22 zugewandten wirksamen Kolbenflächen sind kleiner als die Summe der wirksamen Kolbenflächen 25.1 und 24.2. Im Gehäuse ist eine zweite Gaskammer 22.1 angeordnet, deren Achse in vorgegebenem Abstand parallel zur Achse der ersten Gaskammer 22 verläuft. Koaxial zur zweiten Gaskammer 22.1 liegt die zweite Flüssigkeitskammer 23.3, die über das hydraulische Dämpfungsglied 23.1 und den Verbindungskanal 23.2 mit der ersten Flüssigkeitskammer 23 verbunden ist.

Die in den Fig. 3A bis 3C dargestellte Konstruktion eines hydropneumatischen Federelements kann als Parallel-Anordnung von zwei Gasfedern beschrieben werden, wobei die erste Feder durch die Kolbenfläche 24.1 im Außenrohr 24 der teleskopartigen Rohrstücke und die zweite Feder durch die Kolbenfläche 25.1 am Innenrohr 25 und die Ringfläche 24.2 am Außenrohr 24 der Rohrstücke realisiert ist.

Bei den Ausführungsformen nach den Fig. 1A bis 1C und 3A bis 3C wirkt die zweite Feder über den gesamten Federweg, und die erste und die zweite Feder müssen so dimensioniert sein, dass sie unter allen Betriebstemperaturen in der Lage sind, unter statischer Last bis zum statischen Zustand auszufedern. Die zweite Feder muss so dimensioniert sein, dass sie bei keiner Betriebstemperatur unter statischer Last über den statischen Zustand hinaus ausfedert.

Bei der Ausführungsform nach den Fig. 2A bis 2C wirkt die zweite Feder nur über den Federweg vom statischen Zustand bis zum voll ausgefederten Zustand. Die zweite Feder muss so dimensioniert sein, dass sie bei keiner Betriebstemperatur unter statischer Last über den statischen Zustand hinaus ausfedert. Die erste Feder muss so dimensioniert sein, dass sie unter statischer Last bei allen Betriebstemperaturen in der Lage ist, bis zum statischen Zustand auszufedern.

Um die gewünschte Funktionsweise zu erreichen, müssen bei der Ausführungsform nach Fig. 3A bis 3C bestimmte Randbedingungen erfüllt sein für die Berechnung des Druckniveaus im statischen Zustand (Fig. 3B), die somit die Grundlage für die Auslegung des Federelements bilden.

Es sei $p1$ der voreingestellte Druck in der ersten Gaskammer 22 und $p2$ der entsprechende Druck in der zweiten Gaskammer 22.1. Weiterhin sei $A1$ die Flächengröße der wirksamen Kolbenfläche in der ersten Gaskammer und $A2$ die Flächengröße der Summe der der ersten Flüssigkeitskammer 23 zugewandten Kolbenflächen sowie $K$ die statische Aufstandskraft. Dann müssen die Drucke p1 und p2 so eingestellt sein, dass im Kaltzustand des Federelements folgende Beziehung gilt:

$$p1 \cdot A1 + p2 \cdot (A2 - A1) \geq K.$$

Die grundsätzliche Funktionsweise der Ausführungsform nach Fig. 3A bis 3C ist folgende.

Bei der Bewegung aus dem eingefederten Zustand (Fig. 3C) in den statischen Zustand (Fig. 3B) wirken die erste Gaskammer 22 und die zweite Gaskammer 22.1 zusammen, indem sich zunächst das Außenrohr 24 nach außen bewegt, während das Innenrohr 25 mit dem Kolben 25.1 am Anschlag innerhalb des Gehäuses 21 anliegt. Die Flüssigkeit strömt aus der zweiten Flüssigkeitskammer 23.3 in den Ringraum zwischen dem Innenrohr 25 und der Innenwand des Gehäuses. Im statischen Zustand (Fig. 3B) sind Außenrohr 24 und Innenrohr 25 bis zum Anschlag 24.3 auseinandergefahren, und beim weiteren Ausfedern wirkt nur noch die zweite Gaskammer 22.1. Im statischen Zustand wird die Last nach der oben angegebenen Beziehung von beiden Gasfedern getragen. Bei einer Erwärmung des Gases ist das Innenrohr 25 und damit der Kolben 25.1 durch den Anschlag 24.3 blockiert. Da sich bei Erwärmung auch das Gas in der zweiten Gasfeder 22.1 ausdehnt, würde der Kolben 25.1 von der Zylinderwand abheben. In diesem Falle würde die Last nur noch von der Gasfeder der zweiten Gaskammer 22.1 getragen werden. Die Kraft dieser Feder reicht aber wegen p2 · A2 ≤ K nicht aus, und so legt sich der Kolben 25.1 wieder an die Zylinderwand an und es gilt die Beziehung:

$$p1 \cdot A1 + p2 \cdot (A2 - A1) \leq K.$$

Damit sich die statische Position nicht verschiebt, muss weiterhin gelten:

$$p2 \leq p1.$$

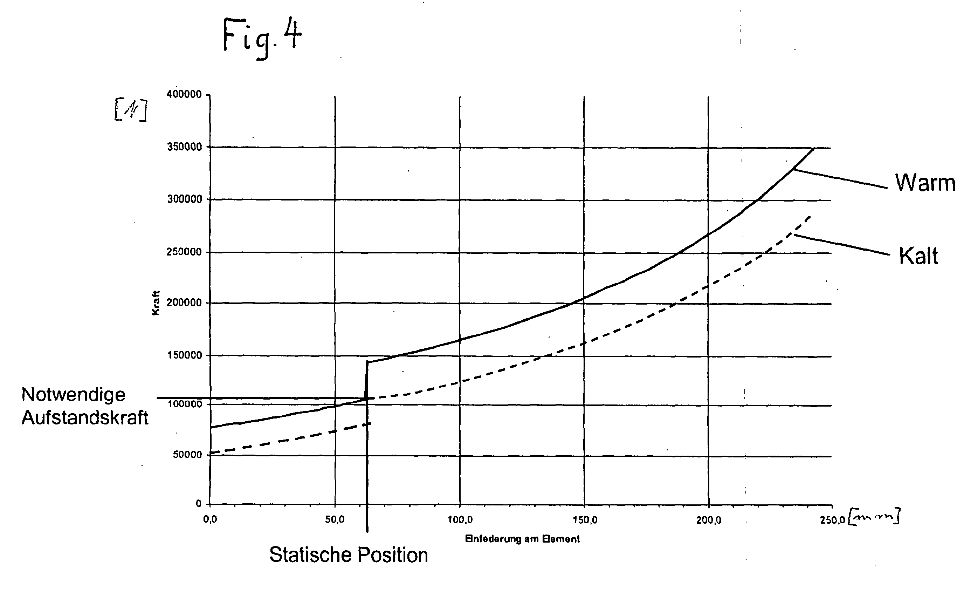

Durch diesen Druckunterschied wird der Sprung in der Kennlinie des Federelements erreicht. Die Federkraft-Federweg-Kennlinie aller anhand der Fig. 1A bis 3C beschriebenen Ausführungsformen des Federelements ist im Prinzip gleich aufgebaut und beispielhaft in Fig. 4 dargestellt. Dabei ist der Kennlinienverlauf im erwärmten Zustand des Federelements mit einer durchgezogenen Kurve und der entsprechende Kennlinienverlauf im kalten Zustand mit einer gestrichelten Kurve dargestellt. Es kann erkannt werden, dass die Kennlinie des Federelements bei der statischen Position der Einfederung einen Sprung macht.

**Patentansprüche**

1. Hydropneumatisches Federelement für Fahrzeuge mit zwei parallel zueinander angeordneten Federn, die als Gasfedern ausgebildet sind, **gekennzeichnet durch** ein Gehäuse (1) mit zylindrischem Innenraum, in dem zwei teleskopartig ineinander verschiebbar geführte Rohrstücke (4, 5) angeordnet sind, wobei eine erste Feder einen im Bereich eines Federweges zwischen dem voll eingefederten Zustand (Fig. 1 C) und einem vorgegebenen, teilweise ausgefederten Zustand bewegbaren, **durch** ein Außenrohr (5) gebildeten Ringkolben aufweist, dessen Bewegung bei Erreichen des teilweise ausgefederten Zustandes **durch** einen Anschlag (1.1) blockiert wird, und eine zweite, über den gesamten Bereich des Federwegs wirksame Feder ein teleskopartig im Außenrohr (5) geführtes Innenrohr (4) aufweist und die wirksame Kolbenfläche (5.1) der ersten Feder am Außenrohr (5) und die wirksame Kolbenfläche (4.1, 4.2) der zweiten Feder am Innenrohr (4) angeordnet sind, und wobei zur Verwendung an einem Kettenfahrzeug zur Begrenzung des Ausfederweges bei erhöhter Temperatur des Federelementes unter statischer Last die erste Feder nur im Bereich des Federweges zwischen dem voll eingefederten Zustand und dem statischen Zustand des Federelements wirksam ist und so dimensioniert ist, dass sie bei allen Betriebstemperaturen in der Lage ist, unter statischer Last bis zum statischen Zustand auszufedern und bei Überschreitung des statischen Zustandes **durch** den Anschlag ausgeschaltet wird und auch die zweite Feder so dimensioniert ist, dass sie bei allen Betriebstemperaturen unter statischer Last in der Lage ist, bis zum statischen Zustand aber nicht über diesen hinaus auszufedern und wobei der Ringkolben in einer Gaskammer (2-2.3) geführt ist, wobei die wirksamen Kolbenflächen (5.1, 4.1, 4.2) der beiden Federn der Gaskammer zugewandt sind und eine erste Flüssigkeitskammer (3) zwischen dem Innenrohr (4) und der Innenwand des Gehäuses (1) bzw. der Innenwand des Außenrohrs (5) ausgebildet ist und die erste Flüssigkeitskammer (3) über ein hydraulisches Dämpfungsglied (3.1) mit einer zweiten Flüssigkeitskammer (3.3) verbunden ist.

2. Hydropneumatisches Federelement für Fahrzeuge mit zwei Federn, die als Gasfedern ausgebildet sind, wobei eine erste Feder einen im Bereich eines Federwegs zwischen dem voll eingefederten Zustand (Fig. 2 C) und einem vorgegebenen, teilweise ausgefederten Zustand in einer Flüssigkeitskammer (13) bewegbaren Kolben (15) aufweist, dessen Bewegung bei Erreichen des teilweise ausgefederten Zustandes durch einen Anschlag (11.1) blockiert wird und eine zweite Feder einen teleskopisch im Kolben (15) der ersten Feder geführten Kolben (14) aufweist und die Flüssigkeitskammer (13-13.3) durch ein Trennelement (16) von einer zweiten Gaskammer (12.1) getrennt ist, **dadurch gekennzeichnet, dass** zur Verwendung an einem Kettenfahrzeug zur Begrenzung des Ausfederweges bei erhöhter Temperatur des Federelements unter statischer Last die erste Feder nur im Bereich des Federwegs zwischen dem voll eingefederten Zustand und dem statischen Zustand des Federelements wirksam ist und so dimensioniert ist, dass sie bei allen Betriebstemperaturen in der Lage ist, unter statischer Last bis zum statischen Zustand auszufedern und bei Überschreitung des statischen Zustandes durch den Anschlag ausgeschaltet wird, während die zweite Feder so dimensioniert ist, dass sie bei allen Betriebstemperaturen unter statischer Last nicht über den statischen Zustand hinaus ausfedert, wobei die erste und zweite Feder in Reihe angeordnet sind und die zweite Feder nur im Bereich des Fahrzeugweges zwischen dem statischen Zustand und dem voll ausgefederten Zustand wirksam ist.

3. Federelement nach Anspruch 2, **dadurch gekennzeichnet, dass** die erste Feder einen geschlossenen Kolben (15) aufweist und die zweite Feder eine Kolbenfläche (14.1) aufweist, welche einer ersten Gaskammer (12) zugewandt ist und im Bereich des Federweges zwischen dem statischen Zustand (Fig. 2 B) und dem voll ausgefederten Zustand (Fig. 2 A) des Federelements bewegbar ist.

4. Federelement nach Anspruch 2 oder 3, **dadurch gekennzeichnet, dass** das Trennelement zwischen der Flüssigkeitskammer (13.3) und der zweiten Gaskammer (12.1) als Trennkolben (16) ausgebildet ist.

5. Federelement nach Anspruch 2 oder 3, **gekennzeichnet durch** ein Gehäuse (11) mit zylindrischem Innenraum, in dem zwei teleskopartig ineinander verschiebbar geführte Rohrstücke (14, 15) angeordnet sind, wobei die erste Gaskammer **durch** den Innenraum (12) der Rohrstücke gebildet ist und am inneren Ende des geschlossenen Außenrohres (15) die wirksame Kolbenfläche (15.1) der ersten Feder angeordnet ist und das Außenrohr (15) bei Erreichen des statischen Zustandes (Fig. 2 B) des Federelements gegen einen am Gehäuse (11) angeordneten Anschlag (11.1) läuft und wobei die wirksame Kolbenfläche (15.1) der ersten Feder einer ersten Flüssigkeitskammer (13) zugewandt ist, die über ein hydraulisches Dämpfungsglied (13.1) mit einer zweiten Flüssigkeitskammer (13.3) verbunden ist, welche **durch** einen beweglichen Trennkolben (16) von einer zweiten Gaskammer (12.1) getrennt ist.

6. Hydropneumatisches Federelement für Fahrzeuge mit zwei Federn, die als Gasfedern ausgebildet sind, wobei eine erste Feder einen im Bereich eines Federweges zwischen dem voll eingefederten Zustand (Fig. 3 C) und einem vorgegebenen, teilweise ausgefederten Zustand (Fig. 3 B) in einer Flüssigkeitskammer (23) bewegbaren Kolben (24) aufweist, dessen Bewegung bei Erreichen des teilweise ausgefederten Zustandes durch einen Anschlag (24.3) blokkiert wird und eine zweite Feder einen teleskopisch im Kolben (24) der ersten Feder geführten Kolben (25) aufweist, dessen wirksame Kolbenfläche (25.1) der Flüssigkeitskammer (23) zugewandt ist, **dadurch gekennzeichnet, dass** zur Verwendung an einem Kettenfahrzeug zur Begrenzung des Ausfederweges bei erhöhter Temperatur des Federelements unter statischer Last, die erste Feder nur im Bereich des Federweges zwischen dem voll eingefederten Zustand und dem statischen Zustand des Federelements wirksam ist und so dimensioniert ist, dass sie bei allen Betriebstemperaturen in der Lage ist, unter statischer Last bis zum statischen Zustand auszufedern und bei Überschreitung des statischen Zustandes durch den Anschlag (24.3) ausgeschaltet wird, wobei die erste Feder und die zweite Feder parallel zueinander angeordnet sind und die erste Feder eine Kolbenfläche (24.1) aufweist, welche einer ersten Gaskammer (22) zugewandt ist und im Bereich des Federweges zwischen dem voll eingefederten Zustand (Fig. 3 C) und dem statischen Zustand (Fig. 3 B) des Federelements bewegbar ist und die zweite Feder eine Kolbenfläche (25.1) und eine Ringkolbenfläche (24.2) aufweist, welche gegeneinander bewegbar sind, wobei die Ringkolbenfläche (24.2) über den gesamten Bereich des Federweges des Federelements und die Kolbenfläche (25.1) über den Bereich des Federweges zwischen dem statischen Zustand (Fig. 3 B) und dem voll ausgefederten Zustand (Fig. 3 A) wirksam ist und auch die zweite Feder so dimensioniert ist, dass sie bei allen Betriebstemperaturen unter statischer Last in der Lage ist bis zum statischen Zustand aber nicht über diesen hinaus (Fig. 3 B) auszufedern.

7. Federelement nach Anspruch 6, **gekennzeichnet durch** ein Gehäuse (21) mit zylindrischem Innenraum, in dem zwei teleskopartig ineinander verschiebbar geführte Rohrstücke (24, 25) angeordnet sind, wobei die erste Gaskammer **durch** den Innenraum (22) der Rohrstücke gebildet ist, und die einer Flüssigkeitskammer (23) zugewandte Seite am inneren Ende des geschlossenen Innenrohres (25) die Kolbenfläche (25.1) und die der Flüssigkeitskammer (23) zugewandte Ringkolbenfläche (24.2) des Außenrohres (24) die wirksamen Kolbenflächen der zweiten Feder bilden, und die wirksame Kolbenfläche (24.1) der ersten Feder im_Innenraum (22) der Rohrstücke angeordnet ist und wobei die erste Flüssigkeitskammer (23) als Ringraum zwischen der Außenwand des Innenrohres (25) und der Innenwand des Gehäuses (21) ausgebildet ist und über ein hydraulisches Dämpfungsglied (23.1) mit einer zweiten Flüssigkeitskammer (23.3) verbunden ist, die **durch** einen beweglichen Trennkolben (26) von einer zweiten Gaskammer (22.1) getrennt ist.

8. Federelement nach Anspruch 7, **dadurch gekennzeichnet, dass** die wirksamen Kolbenflächen so ausgelegt und verteilt und die Drucke in den Gaskammern so eingestellt sind, dass im Kaltzustand des Federelements folgende Beziehung erfüllt ist:

$$p1 \cdot A1 + p2 \, (A2 - A1) \geq K,$$

wobei p1 der Druck in der ersten Gaskammer (22), p2 der Druck in der zweiten Gaskammer (22.1) ist und A 1 die Größe der der ersten Gaskammer (22) zugewandten wirksamen Kolbenflächen und A2 die Größe der der ersten Flüssigkeitskammer (23) zugewandten wirksamen Kolbenflächen ist und K die statische Aufstandskraft ist.

9. Federelement nach Anspruch 8, **dadurch gekennzeichnet, dass** mindestens im erwärmten Zustand des Federelements die Beziehung gilt:

$$p2 \leq p1.$$

10. Federelement nach Anspruch 8 und 9, **dadurch gekennzeichnet, dass** die Werte der wirksamen Kolbenflächen und der Drucke so gewählt sind, dass im erwärmten Zustand der Feder für die statische Position gilt:

$$p2 \cdot A2 \leq K.$$

**Claims**

1. Hydropneumatic spring element for vehicles comprising two springs, which are disposed parallel to one another and take the form of gas springs, **characterized by** a housing (1) having a cylindrical interior, in which are disposed two tubular pieces (4, 5) that are displaceably guided telescopically one into the other, wherein a first spring comprises an annular piston, which is movable in the range of a spring excursion between the fully deflected state (Fig. 1C) and a defined partially rebounded state and is formed by an outer tube (5), the movement of which upon attainment of the partially rebounded state is blocked by means of a stop (1.1), and a second spring that is effective over the entire range of the spring excursion comprises an inner tube (4) guided telescopically in the outer tube (5) and the effective piston area (5.1) of the first spring is disposed on the outer tube (5) and the effective piston area (4.1, 4.2) of the second spring is disposed on the inner tube (4), and wherein for use on a tracked vehicle to limit the rebound travel in the event of an increased temperature of the spring element under static load the first spring is effective only in the range of the spring excursion between the fully deflected state and the static state of the spring element and is so dimensioned that at all operating temperatures it is capable of rebounding under static load as far as the static state and in the event of overshooting of the static state is deactivated by means of the stop and the second spring is likewise so dimensioned that at all operating temperatures under static load it is capable of rebounding as far as but not beyond the static state and wherein the annular piston is guided in a gas chamber (2-2.3), wherein the effective piston areas (5.1, 4.1, 4.2) of the two springs are directed towards the gas chamber and a first liquid chamber (3) is formed between the inner tube (4) and the inner wall of the housing (1) and/or the inner wall of the outer tube (5) and the first liquid chamber (3) is connected by a hydraulic damping element (3.1) to a second liquid chamber (3.3).

2. Hydropneumatic spring element for vehicles comprising two springs that take the form of gas springs, wherein a first spring comprises a piston (15), which is movable in the range of a spring excursion between the fully deflected state (Fig. 2 C) and a defined, partially rebounded state in a liquid chamber (13) and the movement of which upon attainment of the partially rebounded state is blocked by means of a stop (11.1), and a second spring comprises a piston (14), which is guided telescopically in the piston (15) of the first spring, and the liquid chamber (13-13.3) is separated by a separating element (16) from a second gas chamber (12.1), **characterized in that** for use on a tracked vehicle to limit the rebound travel in the event of an increased temperature of the spring element under static load the first spring is effective only in the range of the spring excursion between the fully deflected state and the static state of the spring element and is so dimensioned that at all operating temperatures it is capable under static load of rebounding as far as the static state and in the event of overshooting of the static state is deactivated by means of the stop, while the second spring is so dimensioned that at all operating temperatures under static load it does not rebound beyond the static state, wherein the first and the second spring are disposed in series and the second spring is effective only in the range of the vehicle excursion between the static state and the fully rebound state.

3. Spring element according to claim 2, **characterized**

**in that** the first spring comprises a closed piston (15) and the second spring comprises a piston area (14.1), which is directed towards a first gas chamber (12) and is movable in the range of the spring excursion between the static state (Fig. 2 B) and the fully rebound state (Fig. 2 A) of the spring element.

4. Spring element according to claim 2 or 3, **characterized in that** the separating element between the liquid chamber (13.3) and the second gas chamber (12.1) takes the form of a separating piston (16).

5. Spring element according to claim 2 or 3, **characterized by** a housing (11) having a cylindrical interior, in which are disposed two tubular pieces (14, 15), which are displaceably guided telescopically one in the other, wherein the first gas chamber is formed by the interior (12) of the tubular pieces and on the inner end of the closed outer tube (15) the effective piston area (15.1) of the first spring is disposed and the outer tube (15) upon attainment of the static state (Fig. 2 B) of the spring element runs against a stop (11.1) disposed on the housing (11) and wherein the effective piston area (15.1) of the first spring is directed towards a first liquid chamber (13), which is connected by a hydraulic damping element (13.1) to a second liquid chamber (13.3), which is separated by a movable separating piston (16) from a second gas chamber (12.1).

6. Hydropneumatic spring element for vehicles comprising two springs that take the form of gas springs, wherein a first spring comprises a piston (24), which is movable in the range of a spring excursion between the fully deflected state (Fig. 3 C) and a defined, partially rebounded state (Fig. 3 B) in a liquid chamber (13) and the movement of which upon attainment of the partially rebounded state is blocked by means of a stop (24.3), and a second spring comprises a piston (25), which is guided telescopically in the piston (24) of the first spring and the effective piston area (25.1) of which is directed towards the liquid chamber (23), **characterized in that** for use on a tracked vehicle to limit the rebound travel in the event of increased temperature of the spring element under static load the first spring is effective only in the range of the spring excursion between the fully deflected state and the static state of the spring element and is so dimensioned that at all operating temperatures it is capable of rebounding under static load as far as the static state and in the event of overshooting of the static state is deactivated by means of the stop (24.3), wherein the first spring and the second spring are disposed parallel to one another and the first spring comprises a piston area (24.1), which is directed towards a first gas chamber (22) and is movable in the range of the spring excursion between the fully deflected state (Fig. 3 C) and the static state (Fig. 3 B) of the spring element, and the second spring comprises a piston area (25.1) and an annular piston area (24.2), which are movable towards to one another, wherein the annular piston area (24.2) is effective over the entire range of the spring excursion of the spring element and the piston area (25.1) is effective over the range of the spring excursion between the static state (Fig. 3 B) and the fully rebounded state (Fig. 3 A) and the second spring is likewise so dimensioned that at all operating temperatures under static load it is capable of rebounding as far as but not beyond the static state (Fig. 3 B).

7. Spring element according to claim 6, **characterized by** a housing (21) having a cylindrical interior, in which are disposed two tubular pieces (24, 25) that are displaceably guided telescopically one in the other, wherein the first gas chamber is formed by the interior (22) of the tubular pieces, and the side at the inner end of the closed inner tube (25) that is directed towards a liquid chamber (23) forms the piston area (25.1) and the annular piston area (24.2) of the outer tube (24) that is directed towards the liquid chamber (23) forms the effective piston areas of the second spring, and the effective piston area (24.1) of the first spring is disposed in the interior (22) of the tubular pieces and wherein the first liquid chamber (23) takes the form of an annular chamber between the outer wall of the inner tube (25) and the inner wall of the housing (21) and is connected by a hydraulic damping element (23.1) to a second liquid chamber (23.2), which is separated by a movable separating piston (26) from a second gas chamber (22.1).

8. Spring element according to claim 7, **characterized in that** the effective piston areas are so designed and distributed and the pressures in the gas chambers are so adjusted that in the cold state of the spring element the following relationship is fulfilled:

$$p1 \cdot A1 + p2 (A2 - A1) \geq K,$$

p1 being the pressure in the first gas chamber (22), p2 the pressure in the second gas chamber (22.1), and A1 the size of the effective piston areas directed towards the first gas chamber (22) and A2 the size of the effective piston areas directed towards the first liquid chamber (23) and K the static contact force.

9. Spring element according to claim 8, **characterized in that** at least in the heated state of the spring element the following relationship applies:

$$p2 \leq p1.$$

**10.** Spring element according to claim 8 and 9, **characterized in that** the values of the effective piston areas and the pressures are so selected that in the heated state of the spring the following applies to the static position:

$$p2 \cdot A2 \leq K.$$

## Revendications

**1.** Élément de suspension hydropneumatique pour véhicules, comportant deux ressorts disposés parallèlement l'un à l'autre, qui sont réalisés sous forme de ressorts à gaz comprimé, **caractérisé par** un carter (1) avec un volume intérieur cylindrique, dans lequel sont disposés deux bouts de tube (4, 5) mobiles l'un dans l'autre de manière télescopique, un premier ressort comportant un piston annulaire formé par un tube extérieur (5), qui est apte à se déplacer dans la zone d'un débattement entre la position complètement comprimée (figure 1 C) et une position prédéfinie partiellement détendue, et dont le mouvement est bloqué par une butée (1.1) lorsqu'il atteint la position partiellement détendue, et un deuxième ressort, actif sur la totalité de la zone du débattement, comportant un tube intérieur (4) guidé de manière télescopique dans le tube extérieur (5), et la surface active (5.1) du piston du premier ressort étant disposée sur le tube extérieur (5) et la surface active (4.1, 4.2) du piston du deuxième ressort étant disposée sur le tube intérieur (4), et étant entendu que pour l'utilisation sur un véhicule chenillé, en vue de limiter la distance de débattement en présence d'une augmentation de température de l'élément de suspension sous l'effet d'une charge statique, le premier ressort est actif seulement dans la zone du débattement entre la position totalement comprimée et la position statique de l'élément de suspension et est dimensionné de telle sorte que, quelles que soient les températures de service, ledit ressort est apte à se détendre sous une charge statique jusqu'à la position statique et est immobilisé par la butée lorsqu'il se détend au-delà de la position statique, et le deuxième ressort est également dimensionné de telle sorte que, quelles que soient les températures de service sous une charge statique, il est apte à se détendre jusqu'à la position statique, mais pas au-delà de celle-ci, et étant entendu que sachant que le piston annulaire est logé dans une chambre à gaz (2-2.3), les surfaces actives (5.1, 4.1, 4.2) des pistons des deux ressorts étant orientées vers la chambre à gaz, et une première chambre à liquide (3) étant réalisée entre le tube intérieur (4) et la paroi intérieure du carter (1) ou la paroi intérieure du tube extérieur (5), et la première chambre de liquide (3) étant reliée à une deuxième chambre à liquide (3.3) par l'intermédiaire d'un organe d'amortissement (3.1) hydraulique.

**2.** Élément de suspension hydropneumatique pour véhicules, comportant deux ressorts qui sont réalisés sous forme de ressorts à gaz comprimé, un premier ressort comportant un piston (15), qui est apte à se déplacer dans une chambre à liquide (13) dans la zone d'un débattement entre la position complètement comprimée (figure 2 C) et une position prédéfinie partiellement détendue, et dont le mouvement est bloqué par une butée (11.1) lorsqu'il atteint la position partiellement détendue, et un deuxième ressort comportant un piston (14) logé de manière télescopique dans le piston (15) du premier ressort, et la chambre à liquide (13-13.3) étant séparée d'une deuxième chambre à gaz (12.1) par un élément de séparation (16), **caractérisé en ce que** pour l'utilisation sur un véhicule chenillé, en vue de limiter la distance de débattement en présence d'une augmentation de température de l'élément de suspension sous l'effet d'une charge statique, le premier ressort est actif seulement dans la zone du débattement entre la position totalement comprimée et la position statique de l'élément de suspension et est dimensionné de telle sorte que, quelles que soient les températures de service, il est apte à se détendre sous une charge statique jusqu'à la position statique et est immobilisé par la butée lorsqu'il se détend au-delà de la position statique, tandis que le deuxième ressort est dimensionné de telle sorte que, quelles que soient les températures de service sous une charge statique, il ne se détend pas au-delà de la position statique, le premier et le deuxième ressort étant disposés en série et le deuxième ressort étant actif seulement dans la zone du débattement entre la position statique et la position totalement détendue.

**3.** Élément de suspension selon la revendication 2, **caractérisé en ce que** le premier ressort comporte un piston (15) fermé et le deuxième ressort comporte une surface de piston (14.1) qui est orientée vers une première chambre à gaz (12) et qui peut être déplacée dans la zone du débattement entre la position statique (figure 2 B) et la position totalement détendue (figure 2 A) de l'élément de suspension.

**4.** Élément de suspension selon la revendication 2 ou 3, **caractérisé en ce que** l'élément de séparation entre la chambre à liquide (13.3) et la deuxième chambre à gaz (12.1) est réalisé sous la forme d'un piston de séparation (16).

**5.** Élément de suspension selon la revendication 2 ou 3, **caractérisé par** un carter (11) avec un volume intérieur cylindrique, dans lequel sont disposés deux bouts de tube (14, 15) mobiles l'un dans l'autre de manière télescopique, la première chambre à gaz étant formée par le volume intérieur (12) des bouts de tube, et la surface active (15.1) du piston du premier ressort étant disposée au niveau de l'extrémité intérieure du tube extérieur (15) fermé, et, lorsque la position statique (figure 2 B) de l'élément de suspension est atteinte, le tube extérieur (15) vient heurter contre la butée (11.1) disposée sur le carter (11), et la surface active (15.1) du piston du premier ressort étant orientée vers une première chambre à liquide (13), qui, par l'intermédiaire d'un organe d'amortissement (13.1) hydraulique, est reliée à une deuxième chambre à liquide (13.3) qui est séparée d'une deuxième chambre à gaz (12.1) par un piston de séparation (16) mobile.

**6.** Élément de suspension hydropneumatique pour véhicules, comportant deux ressorts qui sont réalisés sous forme de ressorts à gaz comprimé, un premier ressort comportant un piston (24), qui est apte à se déplacer dans une chambre à liquide (23) dans la zone d'un débattement entre la position complètement comprimée (figure 3 C) et une position prédéfinie partiellement détendue (figure 3 B), et dont le mouvement est bloqué par une butée (24.3) lorsqu'il atteint la position partiellement détendue, et un deuxième ressort comportant un piston (25), qui est logé de manière télescopique dans le piston (24) du premier ressort et dont la surface active (25.1) est orientée vers la chambre à liquide (23), **caractérisé en ce que** pour l'utilisation sur un véhicule chenillé, en vue de limiter la distance de débattement en présence d'une augmentation de température de l'élément de suspension sous l'effet d'une charge statique, le premier ressort est actif seulement dans la zone du débattement entre la position totalement comprimée et la position statique de l'élément de suspension et est dimensionné de telle sorte que, quelles que soient les températures de service, il est apte à se détendre sous une charge statique jusqu'à la position statique et est immobilisé par la butée (24.3) lorsqu'il se détend au-delà de la position statique, sachant que le premier ressort et le deuxième ressort sont disposés parallèlement l'un à l'autre et le premier ressort comporte une surface de piston (24.1) qui est orientée vers une première chambre à gaz (22) et peut se déplacer dans la zone du débattement entre la position complètement comprimée (figure 3 C) et la position statique (figure 3 B) de l'élément de suspension, et le deuxième ressort comporte une surface de piston (25.1) et une surface de piston annulaire (24.2) qui peuvent être déplacées l'une contre l'autre, la surface de piston annulaire (24.2) étant active sur toute la zone du débattement de l'élément de suspension, et la surface de piston (25.1) étant active sur la zone du débattement entre la position statique (figure 3 B) et la position complètement détendue (figure 3 A), et le deuxième ressort est également dimensionné de telle sorte que, quelles que soient les températures de service sous une charge statique, il est apte à se détendre jusqu'à la position statique (figure 3 B), mais pas au-delà de celle-ci.

**7.** Élément de suspension selon la revendication 6, **caractérisé par** un carter (21) avec un volume intérieur cylindrique, dans lequel sont disposés deux bouts de tube (24, 25) mobiles l'un dans l'autre de manière télescopique, la première chambre à gaz étant formée par le volume intérieur (22) des bouts de tube, et le côté, orienté vers une chambre à liquide (23), formant la surface de piston (25.1) au niveau de l'extrémité intérieure du tube intérieur (25) fermé, et la surface de piston annulaire (24.2) du tube extérieur (24), orientée vers la chambre à liquide (23), formant les surfaces actives du piston du deuxième ressort, et la surface active (24.1) du piston du premier ressort étant disposé dans le volume intérieur (22) des bouts de tube, et la première chambre à liquide (23) étant réalisée sous la forme d'une chambre annulaire entre la paroi extérieure du tube intérieur (25) et la paroi intérieure du carter (21) et étant reliée, par l'intermédiaire d'un organe d'amortissement (23.1) hydraulique, à une deuxième chambre à liquide (23.3), qui est séparée d'une deuxième chambre à gaz (22.1) par un piston de séparation (26) mobile.

**8.** Élément de suspension selon la revendication 7, **caractérisé en ce que** les surfaces actives des pistons sont configurées et réparties et les pressions dans les chambres à gaz sont réglées, de telle sorte que, à l'état froid de l'élément de suspension, la relation suivante est remplie :

$$p1 \cdot A1 + p2\,(A2 - A1) \geq K,$$

dans laquelle p1 est la pression dans la première chambre à gaz (22), p2 est la pression dans la deuxième chambre à gaz (22.1) et A1 est la taille des surfaces de piston actives orientées vers la première chambre à gaz (22) et A2 est la taille des surfaces de piston actives orientées vers la première chambre à liquide (23) et K est la force de contact statique.

**9.** Élément de suspension selon la revendication 8, **caractérisé en ce qu'**au moins à l'état chaud de l'élément de suspension, on applique la relation :

**EP 1 657 470 B1**

$$p2 \leq p1.$$

10. Élément de suspension selon les revendications 8 et 9, **caractérisé en ce que** les valeurs des surfaces de piston actives et des pressions sont choisies de telle sorte qu'à l'état chaud des ressorts, on applique pour la position statique :

$$p2 \cdot A2 \leq K.$$

Fig. 1A

Fig. 1B

Fig. 1C

Fig. 2A

Fig. 2B

Fig. 2C

Fig. 3A

Fig. 3B

Fig. 3C

## Fig. 4

EP 1 657 470 B1

**EP 1 657 470 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

*   ES 2221514